# EUROPEAN PATENT SPECIFICATION

(11) **EP 3 608 687 B1**
(45) Date of publication and mention of the grant of the patent: **13.04.2022**
(21) Application number: 18833818.0
(22) Date of filing: 28.06.2018
(51) Int. Cl.: G01B 11/27, G01S 7/40, B60W 30/12, B60W 30/14, G01S 13/931

(54) **VEHICLE ADVANCED ASSISTED DRIVING CALIBRATION DEVICE**
KALIBRIERVORRICHTUNG FÜR FAHRZEUGFAHRASSISTENZSYSTEME
DISPOSITIF D'ÉTALONNAGE DE CONDUITE ASSISTÉE AVANCÉE DE VÉHICULE

(43) Date of publication of application: 12.02.2020
(73) Proprietor: Shenzhen Smartsafe Tech Co., Ltd., Shenzhen Guangdong 518129 (CN)
(72) Inventor: LIU, Jun, Shenzhen, Guangdong 518129 (CN); ZHONG, Yibin, Shenzhen, Guangdong 518129 (CN)
(74) Representative: Mewburn Ellis LLP
(86) International application number: PCT/CN2018/093307
(87) International publication number: WO 2020/000298

(56) References cited:
- CN-A- 106 382 922
- CN-A- 107 449 461
- CN-A- 107 672 594
- CN-A- 107 678 004
- CN-A- 108 120 966
- DE-U1-202016 103 584
- KR-A- 20150 056 343
- US-A1- 2016 223 320

## Description

### TECHNICAL FIELD

The present disclosure relates to a field of vehicle technology. More specifically, the present disclosure relates to an advanced driver assistance calibration device for vehicle.

### BACKGROUND

An adaptive cruise control system and a lane departure warning system are two subsystems of an advanced driver assistance system for vehicle. They use radar sensors and cameras to identify and detect the external environment of the vehicle, and transmit static or dynamic result data back to an electronic control unit of the vehicle for calculation processing, so that the driver can detect possible dangers at the fastest time, draw attention to the dangers and improve safety.

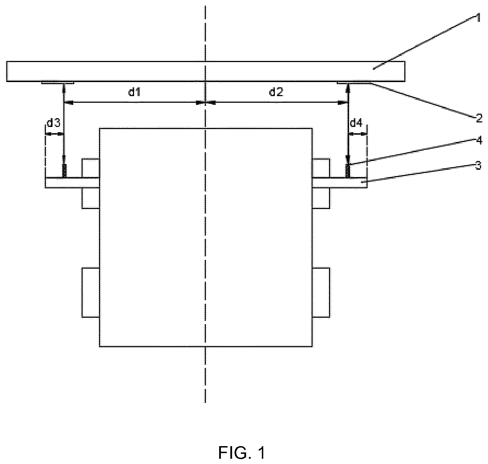

When calibrating the radar sensors and cameras, firstly, a target device is parallel to the front wheel axis of the vehicle and a coincidence adjustment operation between a center line of the target device and a central axis of the vehicle moving direction is carried out, and then a self-owned diagnostic device is used to communicate with the electronic control unit of vehicle for software calibrating. The coincidence adjustment operation in the prior art is as shown in FIG 1. Laser wheel clamps 3 are respectively arranged on the left and right wheels of the vehicle, and the laser wheel clamps 3 are provided with a laser 4 and a scale. A plane of a reflective mirror 2 on a crossbeam of the target device 1 is attached on a vertical plane of the crossbeam and positioned above the crossbeam. Laser beams emitted by the laser 4 are irradiated onto the scale of the crossbeam of the target device, and values of d1 and d2 are generated at this time, and the target device 1 is adjusted so that d1=d2. Then the laser emission angle is adjusted, so that the laser beams are irradiated to the reflective mirror 2 and are reflected to the scale, and the values of d3 and d4 are observed, and then the target device 1 is adjusted so that d3=d4 and d1=d2. In the prior art, the calibration accuracy of the camera and radar sensor is very general after the horizontal coincidence adjustment is performed on the vehicle. For example, DE202016103584 U1 describes a device for calibrating a proximity sensor integrated into the windscreen of a vehicle.

Therefore, how to improve the calibration accuracy of the camera and the radar sensor is a problem to be solved by those skilled in the art.

### SUMMARY

The invention is defined in independent claim 1. Embodiments of the invention are set out in the dependent claims.

The purpose of the present disclosure is to provide an advanced driver assistance calibration device for vehicle that improves the calibration accuracy of the camera and the radar sensor.

To achieve the above object, the present disclosure provides an advanced driver assistance calibration device for vehicle comprising a target device, and
a laser wheel clamp disposed on one front wheel of the vehicle, and a scale wheel clamp disposed on the other front wheel of the vehicle;
a first reflective mirror and a second reflective mirror which are disposed on the target device, and which are symmetrically distributed on both sides of a center of a crossbeam of the target device;
wherein a horizontal scale is disposed on the crossbeam; an angle between the first reflective mirror and the crossbeam, and an angle between the second reflective mirror and the crossbeam are 45 degrees, and an angle between the first reflective mirror and the second reflective mirror is 90 degrees, so that the laser is incident on the second reflective mirror in the direction of the crossbeam through the reflection of the first reflective mirror.

The crossbeam of the target device disclosed herein is horizontal when the advanced driver assistance calibration device for vehicle is in a hardware calibration process, and the distance between the first reflective mirror and the second reflective mirror is adapted to the width of the vehicle, so that the laser is incident on the reference line of the scale wheel clamp through the reflection of the first reflective mirror and the second reflective mirror, and the distance between the incident point of the laser on the first reflective mirror and the center of the crossbeam is equal to the distance between the incident point of the laser on the second reflective mirror and the center of the crossbeam.

When the advanced driver assistance calibration device for vehicle is in a software calibration process, the advanced driver assistance calibration device for vehicle disclosed herein further comprises:
a software calibration device for software calibration on a camera and a radar sensor of the vehicle;
wherein the vehicle is coupled to the software calibration device via a diagnostic connector.

The software calibration device disclosed herein comprises:
a memory storing an executable computer program;
a processor which is coupled with the memory for selecting a target computer program according to the type of the vehicle and executing the target computer program to perform software calibration on the camera and the radar sensor of the vehicle.

The software calibration device disclosed herein further comprises:
a display unit for displaying a calibration result of the camera and the radar sensor.

The processor disclosed herein is also used to update the computer program according to the type of vehicle.

When the advanced driver assistance calibration device for vehicle is in a camera calibration process of the software calibration process, the height of the target device is adapted to the type of the vehicle, and a camera target pattern is fixed on the crossbeam of the target device.

When the advanced driver assistance calibration device for vehicle is in a radar sensor calibration process of the software calibration process, a radar laser is fixed on the target device, and laser light emitted by the radar laser is irradiated to a center of the radar sensor.

According to the above embodiments, the present disclosure provides the advanced driver assistance calibration device for vehicle, comprising a target device, and a laser wheel clamp disposed on one front wheel of the vehicle, and a scale wheel clamp disposed on the other front wheel of the vehicle; a first reflective mirror and a second reflective mirror which are disposed on the target device, and which are symmetrically distributed on both sides of a center of a crossbeam of the target device; wherein a horizontal scale is disposed on the crossbeam; an angle between the first reflective mirror and the crossbeam, and an angle between the second reflective mirror and the crossbeam are 45 degrees, and an angle between the first reflective mirror and the second reflective mirror is 90 degrees, so that the laser is incident on the second reflective mirror in the direction of the crossbeam through the reflection of the first reflective mirror.

When completing the horizontal coincidence adjustment between the target device and the vehicle by the advanced driver assistance calibration device for vehicle provided by the present disclosure, the laser is incident on the second reflective mirror in the direction of the crossbeam through the reflection of the first reflective mirror, and is incident on the scale wheel clip through the reflection of the second reflective mirror; the position of the target device is adjusted so that the illumination spot coincides with the reference line of the scale wheel clamp, and the reflective mirrors at both ends of the crossbeam of the target device are at equal distance from the center of the crossbeam of the target device. The laser beams through two specular reflections still meet the above requirements when traveling through a long distance and the calibration accuracy is high.

### BRIEF DESCRIPTION OF THE DRAWINGS

In order to more clearly illustrate the embodiments of the present disclosure or prior art, the following figures will be described in the embodiments are briefly introduced.
FIG. 1 is a structural diagram of an advanced driver assistance calibration device for vehicle in the prior art;
FIG. 2 is a is a top view of an advanced driver assistance calibration device for vehicle according to an embodiment of the present disclosure;
FIG. 3 is a perspective structural view of an advanced driver assistance calibration device for vehicle according to an embodiment of the present disclosure;
FIG. 4 is a front view of a target device according to an embodiment of the present disclosure;
FIG. 5 is a front view of a crossbeam device of a target device according to an embodiment of the present disclosure;
FIG. 6 is a structural diagram showing a laser wheel clamp and scale wheel clamp according to an embodiment of the present disclosure;
FIG. 7 is a flowchart of a specific application of an advanced driver assistance calibration device for vehicle according to an embodiment of the present disclosure.

### DETAILED DESCRIPTION OF ILLUSTRATED EMBODIMENTS

In order to make those skilled in the art understand the technical solutions of present disclosure better, clear and complete, description of the technical solutions of present disclosure will be illustrated, which combined with the drawings of embodiments in present disclosure.

An embodiment of the present disclosure discloses an advanced driver assistance calibration device for vehicle, which improves the calibration accuracy of the camera and the radar sensor.

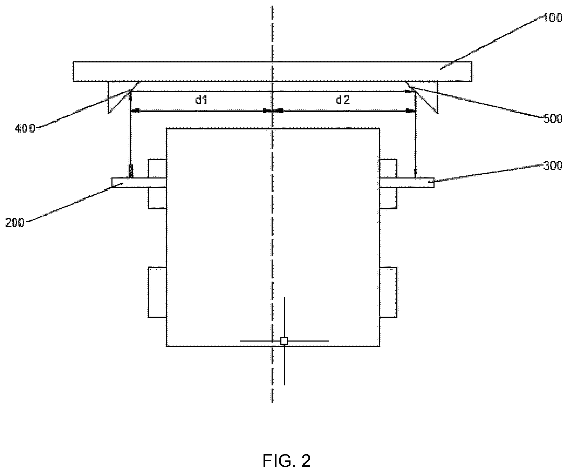

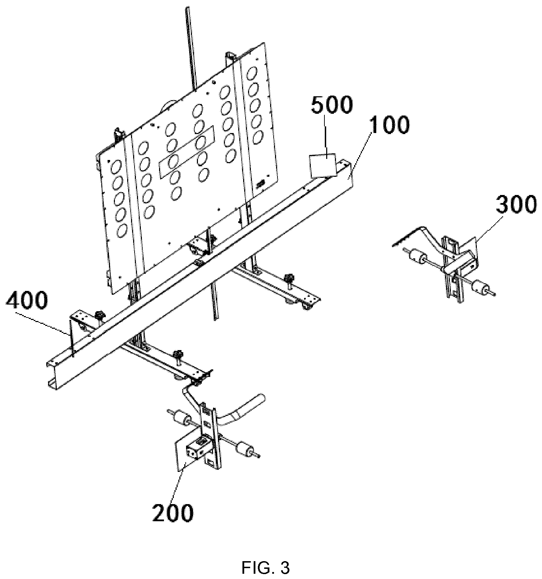

Referring to FIG. 2 to FIG. 3. FIG. 2 is a top view of an advanced driver assistance calibration device for vehicle according to an embodiment of the present disclosure. FIG. 3 is a perspective structural view of an advanced driver assistance calibration device for vehicle according to an embodiment of the present disclosure, which comprise a target device 100.

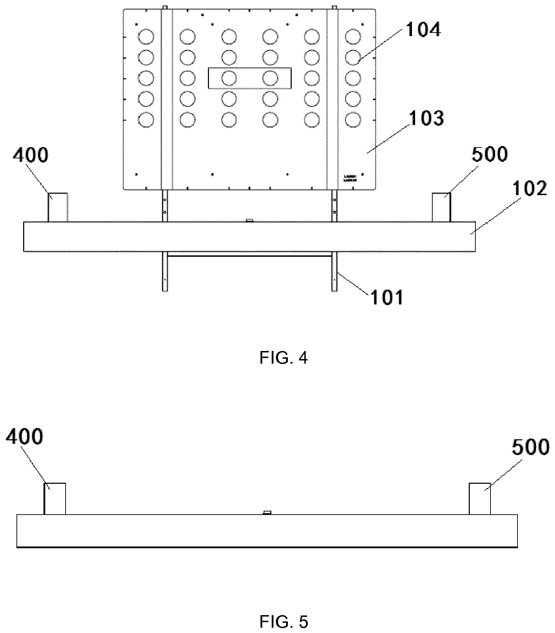

In a specific embodiment, the target device 100 shown in FIG. 4 is composed of a target bracket, a movable support frame 101 which can be locked or fine-tuned on height, a crossbeam device 102 whose height can be adjusted to multiple altitudes (shown in FIG. 5), a height-adjustable target 103, a target drawing 104 and a gradienter. The target comprises a rack-and-pinion device and an operating handle. The rack-and-pinion device is controlled by the operating handle to adjust the height of target, and the gradienter is used to adjust the levelness of the target device.

A laser wheel clamp 200 is disposed on one front wheel of the vehicle, and a scale wheel clamp 300 is disposed on the other front wheel of the vehicle.

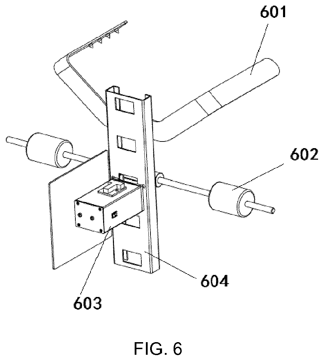

In a specific embodiment, laser wheel clamp 200 is composed of a wheel claw, a laser and a fastening rod from top to bottom. The laser is adjustable in height direction, the emission direction is fixed horizontally, and the height direction is perpendicular to the fastening rod. Scale wheel clamp 300 is composed of a wheel claw, a scale and a fastening rod from top to bottom. The scale is adjustable in height direction, and its height direction is perpendicular to the fastening rod, and the scale plate is marked with scale indication and a reference line. It should be noted that, the present embodiment does not limit which front wheel that laser wheel clamp 200 and scale wheel clamp 300 are specifically disposed on according to the principle of reversible optical path. That is, any case where one front wheel of the vehicle is provided with the laser wheel clamp and the other front wheel is provided with scale wheel clamp 300 is within the protection scope of the present embodiment, and FIG. 2 and FIG. 3 are simple examples of one of the above situations. In addition, the structure of laser wheel clamp 200 and scale wheel clamp 300 can be universal. That is, as shown in FIG. 6, the structure is composed of wheel claw 601, fixing rod 602 of a scale plate, laser 603, and fastening rod 604 from top to bottom. When the structure of FIG. 6 is used as laser wheel clamp 200, laser 603 is turned off.

First reflective mirror 400 and second reflective mirror 500 are disposed on the target device, and they are symmetrically distributed on both sides of a center of a crossbeam of the target device 100; wherein a horizontal scale is disposed on the crossbeam; an angle between the first reflective mirror and the crossbeam, and an angle between the second reflective mirror and the crossbeam are 45 degrees, and an angle between the first reflective mirror and the second reflective mirror is 90 degrees, so that the laser is incident on the second reflective mirror in the direction of the crossbeam through the reflection of the first reflective mirror.

In a specific embodiment, the crossbeam device of target device 100 comprises a guide rail, two sliders, a first reflective mirror 400 and a second reflective mirror 500; the two reflective mirrors are vertically fixed on the sliders, and the angle with the crossbeam is 45 degrees, and they are symmetrically distributed along the center of the crossbeam. The horizontal scale is also marked on the crossbeam device.

When the horizontal coincidence adjustment between the target device and the vehicle is completed, that is, when the advanced driver assistance calibration device for vehicle is in a hardware calibration process, the crossbeam of the target device is horizontal, and the distance between the first reflective mirror and the second reflective mirror is adapted to the width of the vehicle. The laser is incident on the first reflective mirror in the direction of the central axis of the vehicle, and is incident on the second reflective mirror in the direction of the crossbeam through the reflection of the first reflective mirror, and is incident on the scale wheel clip through the reflection of the second mirror. The position of the target device is adjusted so that the illumination spot coincides with the reference line of the scale wheel clamp, and the distance between the incident point of the laser on the first reflective mirror and the center of the crossbeam is equal to the distance between the incident point of the laser on the second reflective mirror and the center of the crossbeam. That is, the reflective mirrors at both ends of the crossbeam of the target device are at equal distance from the center of the crossbeam of the target device.

When completing the horizontal coincidence adjustment between the target device and the vehicle by the advanced driver assistance calibration device for vehicle provided by the present disclosure, the laser is incident on the second reflective mirror in the direction of the crossbeam through the reflection of the first reflective mirror, and is incident on the scale wheel clip through the reflection of the second mirror; the position of the target device is adjusted so that the illumination spot coincides with the reference line of the scale wheel clamp, and the reflective mirrors at both ends of the crossbeam of the target device are at equal distance from the center of the crossbeam of the target device. The laser beams through two specular reflections still meet the above requirements when traveling through a long distance and the calibration accuracy is high.

Based on the above embodiments, as a preferred embodiment, the advanced driver assistance calibration device for vehicle also has a software calibration process. Specifically, when the advanced driver assistance calibration device for vehicle is in a software calibration process, the advanced driver assistance calibration device for vehicle further comprises:
a software calibration device for software calibration on a camera and a radar sensor of the vehicle;
wherein the vehicle is coupled to the software calibration device via a diagnostic connector.

In a specific embodiment, after completing the horizontal coincidence adjustment operation between the target device and the vehicle, the software calibration on the camera and the radar sensor of the vehicle is also required. The diagnostic connector can be plugged into an interface of an OBD-II (English full name: On-Board Diagnostic) of the vehicle. The software calibration device can be connected to the diagnostic connector via Bluetooth, USB or other means to establish a communication between the vehicle and the software calibration device. The calibration diagnostic software in a diagnostic device is run and the software calibration instruction is sent to the electronic control unit of ADAS (English full name: Advanced Driver Assistance Systems) of the vehicle.

The software calibration device can comprises:
a memory storing an executable computer program;
a processor which is coupled with the memory for selecting a target computer program according to the type of the vehicle and executing the target computer program to perform software calibrating on the camera and the radar sensor of the vehicle.

Based on the above embodiments, as a preferred embodiment, the software calibration device further comprises:
a display unit for displaying a calibration result of the camera and the radar sensor.

It should be noted that the display unit can not only display the calibration result of the camera and the radar sensor, but also display the accuracy of the hardware calibration.

Based on the above embodiments, as a preferred embodiment, the processor is also used to update the computer program according to the type of vehicle.

Understandably, due to the different calibration diagnostic software used by different types of vehicle, even the same type of vehicle, the calibration diagnostic software may be upgraded due to changes in the vehicle communication protocol or optimization of software itself. The latest release version of the current calibration diagnostic software can be queried from the background of website via the https protocol. If the release version is newer than the local version of the diagnostic device, the software can be downloaded and upgraded.

Based on the above embodiments, as a preferred embodiment, when the advanced driver assistance calibration device for vehicle is in a camera calibration process of the software calibration process, the height of the target device is adapted to the type of the vehicle, and a camera target pattern (ie, the pattern on the target drawing 104 in FIG. 4) is fixed on the crossbeam of the target device.

In a specific embodiment, the height of the target is adjusted to the height value required by the vehicle type, and the camera target pattern corresponding to the vehicle type is closely attached to the target plane, and then a communication is established between the software calibration device and the vehicle. The calibration diagnostic software in the diagnostic device is run, and the software calibration instruction is sent to the electronic control unit of ADAS of the vehicle to complete the calibration task of LDW (English full name: Lane departure warning system) of the vehicle.

Based on the above embodiments, as a preferred embodiment, when the advanced driver assistance calibration device for vehicle is in a radar sensor calibration process of the software calibration process, a radar laser is fixed on the target device, and laser light emitted by the radar laser is irradiated to a center of the radar sensor.

In a specific embodiment, the height of the crossbeam device is adjusted to be close to the height of radar sensor in front of the vehicle as far as possible. A fixed component of the radar laser is hung on the crossbeam device, the radar laser is attached on the fixed component, and the position of the radar laser is adjusted, so that the laser beams emitted by the radar laser are irradiated to a center of the radar sensor in front of the vehicle, and then the same operation as described above is used to establish the communication between the diagnostic device and the vehicle, the calibration diagnostic software is run and the ACC (English full name: Adaptive cruise control)calibration function is executed according to the software operation tips, that is, the ACC calibration task of the vehicle is completed.

Specifically, an application method of the advanced driver assistance calibration device for vehicle is described as follows.

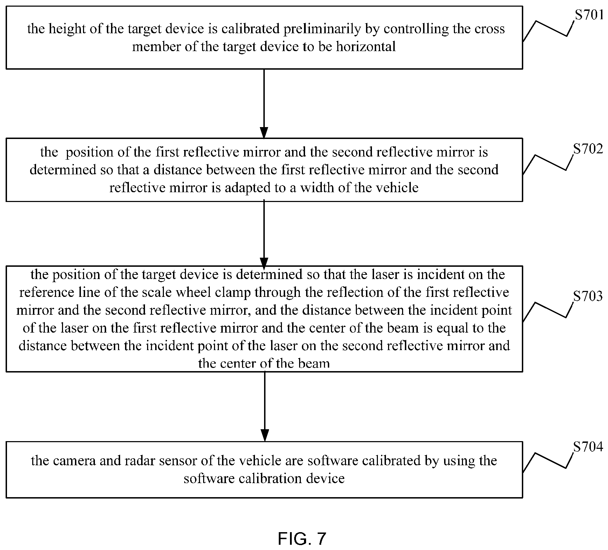

Referring to FIG. 7, a flowchart of a specific application of the advanced driver assistance calibration device for vehicle disclosed in the embodiment of the present disclosure comprises following steps.

Step S701, the height of the target device is calibrated preliminarily by controlling the crossbeam of the target device to be horizontal.

In a specific embodiment, the target device is placed in front of the front part of the vehicle at a desired distance. A preliminary calibration on the height of the target device is performed by adjusting the height position of the crossbeam device, so that the height of the crossbeam device is close to the height of the wheel center of the vehicle as far as possible. The crossbeam device is adjusted to be horizontal by means of the gradienter and the movable support frame which can be fine-tuned on height. The wheels are controlled in the forward position and the tire pressure reaches the standard air pressure.

It should be noted that all the steps in the specification do not limit the specific subject of the execution, that is, the steps can be completed manually, or can be automatically controlled by writing a computer program.

Step S702, the position of the first reflective mirror and the second reflective mirror is determined so that a distance between the first reflective mirror and the second reflective mirror is adapted to a width of the vehicle.

In a specific embodiment, the laser wheel clamp and the scale wheel clamp are fixed on the left and right front wheels of the vehicle respectively, and the fastening rod is adjusted to be horizontal. The angle between the two reflective mirrors and the crossbeam, and the distance between the two reflective mirrors are determined so that the laser is incident on the second reflective mirror in the direction of the crossbeam through the reflection of the first reflective mirror.

Step S703, the position of the target device is determined so that the laser is incident on the reference line of the scale wheel clamp through the reflection of the first reflective mirror and the second reflective mirror, and the distance between the incident point of the laser on the first reflective mirror and the center of the crossbeam is equal to the distance between the incident point of the laser on the second reflective mirror and the center of the crossbeam.

In a specific embodiment, the laser is turned on, and the position of the movable mirror sliders on the guide rail of the crossbeam device and the target device are adjusted, so that the laser beams emitted horizontally are incident on the reference line of the scale wheel clamp through two reflections of the reflective mirrors. At this time, according to the horizontal scale on the crossbeam device, the distance between the two mirror sliders from the center of the crossbeam of the target device, i.e. D1 and d2, is measured. If d1 is not equal to d2, the position of the mirror sliders and the target device are fine-tuned. Under the condition that the value of d1+d2 is constant, d1 and d2 are made to be equal, and the laser beams are still incident on the reference line of the scale wheel clamp.

Step S704, the camera and radar sensor of the vehicle are software calibrated by using the software calibration device.

The various embodiments in the present specification are described in a progressive manner, and each embodiment focuses on differences from other embodiments, and the same or similar content between the various embodiments may be referred to each other.

The above description of the disclosed embodiments enables those skilled in the art to implement or use the disclosure. Various modifications to these embodiments are obvious to those skilled in the art, and the general principles defined herein may be implemented in other embodiments without departing from the scope of the appended claims.

Therefore, the present disclosure is not limited to the embodiments shown herein, but the scope of the invention is defined by the claims.

The various embodiments in the present specification are described in a progressive manner, and each embodiment focuses on differences from other embodiments, and the same or similar content between the various embodiments may be referred to each other. For the system disclosed in the embodiment, since it corresponds to the method disclosed in the embodiment, the description is relatively simple, and the relevant parts can be referred to the method part for description. It should be noted that those skilled in the art can make various modifications and changes to the present disclosure without departing from the scope of the invention as defined by the claims.

It should also be noted that in this specification, relational terms such as "first" and "second" are used merely to distinguish one entity or operation from another entity or operation, without necessarily requiring or implying that there is any such actual relationship or order between these entities or operations. Furthermore, the term "comprise", "include" or any other variants thereof is intended to encompass a non-exclusive inclusion, so that a process, method, article, or device comprising a plurality of elements comprises not only those elements but also other elements, or elements that are inherent to such a process, method, article, or device. Without more restrictions, an element that is defined by the phrase "comprising a ..." does not exclude the presence of additional equivalent elements in the process, method, item, or device that comprises the element.

## Claims

1. An advanced driver assistance calibration device for a vehicle comprising a target device (100), and
a laser wheel clamp (200) attachable on one front wheel of the vehicle, and a scale wheel clamp (300) attachable on the other front wheel of the vehicle;
a first reflective mirror (400) and a second reflective mirror (500) which are disposed on the target device (100), and which are symmetrically distributed on both sides of a center of a crossbeam (102) of the target device (100);
**characterized in that** a horizontal scale is disposed on the crossbeam (102), an angle between the first reflective mirror (400) and the crossbeam (102), and an angle between the second reflective mirror and the crossbeam (102) are 45 degrees, and an angle between the first reflective mirror (400) and the second reflective mirror (500) is 90 degrees, so that, in operation, a laser beam orthogonal to the crossbeam (102) and incident on the first reflective mirror (400) at 45 degrees in the horizontal plane is incident on the second reflective mirror (500) in the direction of the crossbeam (102) through the reflection of the first reflective mirror (400).

2. The advanced driver assistance calibration device for a vehicle according to claim 1, wherein the crossbeam of the target device (100) is horizontal, and the distance between the first reflective mirror (400) and the second reflective mirror (500) is adaptable to the width of the vehicle, so that the laser is incident on the reference line of the scale wheel clamp (300) through the reflection of the first reflective mirror (400) and the second reflective mirror (500), and the distance between the incident point of the laser on the first reflective mirror (400) and the center of the crossbeam is equal to the distance between the incident point of the laser on the second reflective mirror (500) and the center of the crossbeam.

3. The advanced driver assistance calibration device for vehicle according to claim 1, further comprising:
a software calibration device for software calibration on a camera and radar sensor of the vehicle;
wherein the software calibration device is connectable to the vehicle via a diagnostic connector.

4. The advanced driver assistance calibration device for vehicle according to claim 3, wherein the software calibration device comprises:
a memory storing an executable computer program;
a processor which is coupled with the memory for selecting a target computer program according to the type of the vehicle and executing the target computer program to perform software calibration on the camera and the radar sensor of the vehicle.

5. The advanced driver assistance calibration device for vehicle according to claim 4, wherein the software calibration device further comprises:
a display unit for displaying a calibration result of the camera and the radar sensor.

6. The advanced driver assistance calibration device for vehicle according to claim 4, wherein the processor is also configured to update the computer program according to the type of vehicle.

7. The advanced driver assistance calibration device for vehicle according to claim 3, the height of the target device (100) being adaptable to the type of the vehicle, and a camera target pattern being fixed on the crossbeam (102) of the target device (100).

8. The advanced driver assistance calibration device for vehicle according to claim 3, a radar laser being fixed on the target device (100), and adjustable to irradiate a center of a radar sensor of the vehicle.

## Patentansprüche

1. Erweiterte Fahrerassistenz-Kalibriervorrichtung für ein Fahrzeug, umfassend eine Zielvorrichtung (100) und
eine Laser-Radklemme (200), die auf einem Vorderrad des Fahrzeugs anbringbar ist, und eine Skala-Radklemme (300), die auf dem anderen Vorderrad des Fahrzeugs anbringbar ist;
einen ersten Reflexionsspiegel (400) und einen zweiten Reflexionsspiegel (500), die auf der Zielvorrichtung (100) angeordnet sind und symmetrisch auf beiden Seiten von der Mitte eines Querträgers (102) der Zielvorrichtung (100) verteilt sind;
**dadurch gekennzeichnet, dass** eine horizontale Skala auf dem Querträger (102) angeordnet ist, ein Winkel zwischen dem ersten Reflexionsspiegel (400) und dem Querträger (102), und ein Winkel zwischen dem zweiten Reflexionsspiegel und dem Querträger (102) 45 Grad betragen, und ein Winkel zwischen dem ersten Reflexionsspiegel (400) und dem zweiten Reflexionsspiegel (500) 90 Grad beträgt, sodass im Betrieb ein Laserstrahl, der normal auf den Querträger (102) ist und auf den ersten Reflexionsspiegel (400) mit 45 Grad in der horizontalen Ebene einfällt, auf den zweiten Reflexionsspiegel (500) in Richtung des Querträgers (102) durch die Reflexion des ersten Reflexionsspiegels (400) einfällt.

2. Erweiterte Fahrerassistenz-Kalibriervorrichtung für ein Fahrzeug nach Anspruch 1, wobei der Querträger der Zielvorrichtung (100) horizontal ist, und der Abstand zwischen dem ersten Reflexionsspiegel (400) und dem zweiten Reflexionsspiegel (500) an die Breite des Fahrzeugs anpassbar ist, sodass der Laser auf der Referenzlinie der Skala-Radklemme (300) durch die Reflexion des ersten Reflexionsspiegels (400) und des zweiten Reflexionsspiegels (500) einfällt, und der Abstand zwischen dem Einfallpunkt des Lasers auf den ersten Reflexionsspiegel (400) und die Mitte des Querträgers gleich dem Abstand zwischen dem Einfallpunkt des Lasers auf den zweiten Reflexionsspiegel (500) und der Mitte des Querträgers ist.

3. Erweiterte Fahrerassistenz-Kalibriervorrichtung für ein Fahrzeug nach Anspruch 1, die außerdem Folgendes umfasst:
eine Software-Kalibriervorrichtung zur Software-Kalibrierung einer Kamera und eines Radarsensors eines Fahrzeugs,
wobei die Software-Kalibriervorrichtung mit dem Fahrzeug über einen Diagnose-Verbinder verbindbar ist.

4. Erweiterte Fahrerassistenz-Kalibriervorrichtung für ein Fahrzeug nach Anspruch 3, wobei die Software-Kalibriervorrichtung Folgendes umfasst:
einen Speicher, der ein ausführbares Computerprogramm speichert;
einen Prozessor, der mit dem Speicher gekoppelt ist, um ein Zielcomputerprogramm gemäß dem Fahrzeugtyp auszuwählen und das Zielcomputerprogramm auszuführen, um Softwarekalibrierung der Kamera und des Radarsensors des Fahrzeugs durchzuführen.

5. Erweiterte Fahrerassistenz-Kalibriervorrichtung für ein Fahrzeug nach Anspruch 4, wobei die Software-Kalibriervorrichtung außerdem Folgendes umfasst:
eine Anzeigeeinheit zum Anzeigen eines Kalibrierungsergebnisses der Kamera und des Radarsensors.

6. Erweiterte Fahrerassistenz-Kalibriervorrichtung für ein Fahrzeug nach Anspruch 4, wobei der Prozessor auch konfiguriert ist, um das Computerprogramm gemäß dem Fahrzeugtyp zu aktualisieren.

7. Erweiterte Fahrerassistenz-Kalibriervorrichtung für ein Fahrzeug nach Anspruch 3, wobei die Höhe der Zielvorrichtung (100) an den Fahrzeugtyp anpassbar ist und ein Kamera-Zielmuster auf dem Querträger (102) der Zielvorrichtung (100) fixiert ist.

8. Erweiterte Fahrerassistenz-Kalibriervorrichtung für ein Fahrzeug nach Anspruch 3, wobei ein Radar-Laser auf der Zielvorrichtung (100) fixiert ist und anpassbar ist, um eine Mitte eines Radarsensors des Fahrzeuges zu bestrahlen.

## Revendications

1. Dispositif d'étalonnage d'assistance au conducteur avancé pour un véhicule comprenant un dispositif cible (100), et
un étrier de roue à laser (200) pouvant être fixé sur une roue avant du véhicule, et un étrier de roue à échelle (300) pouvant être fixé sur l'autre roue avant du véhicule ;
un premier miroir réfléchissant (400) et un second miroir réfléchissant (500) qui sont disposés sur le dispositif cible (100), et qui sont répartis de manière symétrique des deux côtés d'un centre d'une traverse (102) du dispositif cible (100) ;
**caractérisé en ce qu'**une échelle horizontale est disposée sur la traverse (102), un angle entre le premier miroir réfléchissant (400) et la traverse (102), et un angle entre le second miroir réfléchissant et la traverse (102) sont de 45 degrés, et un angle entre le premier miroir réfléchissant (400) et le second miroir réfléchissant (500) est de 90 degrés, de sorte qu'en fonctionnement, un faisceau laser orthogonal à la traverse (102) et incident sur le premier miroir réfléchissant (400) à 45 degrés dans le plan horizontal est incident sur le second miroir réfléchissant (500) dans la direction de la traverse (102) à travers la réflexion du premier miroir réfléchissant (400).

2. Dispositif d'étalonnage d'assistance au conducteur avancé pour un véhicule selon la revendication 1, dans lequel la traverse du dispositif cible (100) est horizontale, et
la distance entre le premier miroir réfléchissant (400) et le second miroir réfléchissant (500) est adaptable à la largeur du véhicule, de sorte que le laser est incident sur la ligne de référence de l'étrier de roue à échelle (300) à travers la réflexion du premier miroir réfléchissant (400) et du second miroir réfléchissant (500), et la distance entre le point incident du laser sur le premier miroir réfléchissant (400) et le centre de la traverse est égale à la distance entre le point incident du laser sur le second miroir réfléchissant (500) et le centre de la traverse.

3. Dispositif d'étalonnage d'assistance au conducteur avancé pour un véhicule selon la revendication 1, comprenant en outre :
un dispositif d'étalonnage logiciel pour un étalonnage logiciel sur une caméra et un capteur radar du véhicule ;
dans lequel le dispositif d'étalonnage logiciel peut être connecté au véhicule via un connecteur de diagnostic.

4. Dispositif d'étalonnage d'assistance au conducteur avancé pour un véhicule selon la revendication 3, dans lequel le dispositif d'étalonnage logiciel comprend :
une mémoire stockant un programme informatique exécutable ;
un processeur qui est couplé à la mémoire pour sélectionner un programme informatique cible selon le type du véhicule et exécuter le programme informatique cible pour effectuer un étalonnage logiciel sur la caméra et le capteur radar du véhicule.

5. Dispositif d'étalonnage d'assistance au conducteur avancé pour un véhicule selon la revendication 4, dans lequel le dispositif d'étalonnage logiciel comprend en outre :
une unité d'affichage pour afficher un résultat d'étalonnage de la caméra et du capteur radar.

6. Dispositif d'étalonnage d'assistance au conducteur avancé pour un véhicule selon la revendication 4, dans lequel le processeur est également configuré pour mettre à jour le programme informatique selon le type de véhicule.

7. Dispositif d'étalonnage d'assistance au conducteur avancé pour un véhicule selon la revendication 3, la hauteur du dispositif cible (100) étant adaptable au type du véhicule, et un motif cible de caméra étant fixé sur la traverse (102) du dispositif cible (100).

8. Dispositif d'étalonnage d'assistance au conducteur avancé pour un véhicule selon la revendication 3, un laser radar étant fixé sur le dispositif cible (100), et ajustable pour irradier un centre d'un capteur radar du véhicule.
